# EUROPEAN PATENT APPLICATION

(11) **EP 4 454 920 A1**
(43) Date of publication of application: **30.10.2024**
(21) Application number: 24161812.3
(22) Date of filing: 06.03.2024
(51) Int. Cl.: B60K 11/02, B60H 1/00, B60L 58/27, H01M 10/615, H01M 10/625, B60K 1/00

(54) **THERMAL MANAGEMENT SYSTEM FOR HEATING AN ELECTRICAL ENERGY STORAGE**

(30) Priority: 09.03.2023 JP 2023036610
(71) Applicant: TOYOTA JIDOSHA KABUSHIKI KAISHA, Toyota-shi, Aichi-ken, 471-8571 (JP)
(72) Inventor: SUZUKI, Tomoaki, Toyota-shi, 471-8571 (JP)
(74) Representative: D Young & Co LLP

(57) **Abstract**

A thermal management system (1; 2; 3; 4) includes: a first flow path (170b; 270a; 270b; 270c), a second flow path (130b; 260a; 260b; 260c), a third flow path (130a; 230a; 230c; 230d), and a fourth flow path (170a; 210a; 210b; 210c); an electrical storage device (173; 272) configured to exchange heat with the heat medium in the first flow path (170b; 270a; 270b; 270c); a drive device (133, 134; 263, 264) configured to exchange heat with the heat medium in the second flow path (130b; 260a; 260b; 260c); a radiator (122; 231) located in the third flow path (130a; 230a; 230c; 230d); a chiller device (160; 220) located in the fourth flow path (170a; 210a; 210b; 210c); and a switching device (180, 190; 280; 380, 390; 480). The switching device (180, 190; 280; 380, 390; 480) is configured to cause a first circuit to be formed when heating for increasing a temperature of the electrical storage device (173; 272) is performed. The first circuit has a first path in which the heat medium circulates through the first flow path (170b; 270a; 270b; 270c) and the fourth flow path (170a; 210a; 210b; 210c) and a second path in which the heat medium circulates through the second flow path (130b; 260a; 260b; 260c) and the third flow path (130a; 230a; 230c; 230d).

## Description

### BACKGROUND OF THE INVENTION

### 1. Field of the Invention

The present disclosure relates to thermal management systems.

### 2. Description of Related Art

Japanese Unexamined Patent Application Publication No. 2010-272395 (JP 2010-272395 A) discloses an electrified vehicle. The electrified vehicle includes an electrical storage device (battery), an inverter, a motor, and a control device. The electrical storage device is connected to the inverter. The inverter is connected to the motor. The control device controls the current of the electrical storage device by controlling switching of the inverter. The control device thus controls heat that is generated due to power loss in the internal resistance of the electrical storage device. As a result, the control device can perform a heating control for increasing the temperature of the electrical storage device using the current of the electrical storage device (self-heating of the electrical storage device).

### SUMMARY OF THE INVENTION

In electrical apparatuses such as electrified vehicles, it is sometimes desired to effectively use heat from a drive device including an inverter and a motor. It is also desired to efficiently perform self-heating of an electrical storage device. That is, it is desired to efficiently perform self-heating of the electrical storage device while allowing effective use of the heat generated by the drive device.

The present disclosure provides a thermal management system that can efficiently perform self-heating of an electrical storage device while allowing efficient use of heat generated by a drive device.

A thermal management system according to a first aspect of the present disclosure is a thermal management system mounted on an electrical apparatus. The thermal management system includes: a first flow path, a second flow path, a third flow path, and a fourth flow path configured such that a heat medium flows through the first flow path, the second flow path, the third flow path, and the fourth flow path; an electrical storage device configured to exchange heat with the heat medium in the first flow path; a drive device configured to exchange heat with the heat medium in the second flow path and to supply a driving force to the electrical apparatus; a radiator located in the third flow path; a chiller device located in the fourth flow path; and a switching device configured to switch a connection state among the first flow path, the second flow path, the third flow path, and the fourth flow path. The switching device is configured to cause a first circuit to be formed when heating of the electrical storage device for increasing a temperature of the electrical storage device is performed by causing a current to flow through the electrical storage device. The first circuit has a first path and a second path. The first path is a path in which the heat medium circulates through the first flow path and the fourth flow path, and the second path is a path in which the heat medium circulates through the second flow path and the third flow path.

With this configuration, heat from self-heating of the electrical storage device can be stored in the heat medium in the first path of the first circuit. Moreover, heat generated by the drive device can be stored in the heat medium in the second path of the first circuit. The heat thus accumulated in the heat medium can be used to warm up various devices. It is therefore possible to efficiently perform self-heating of the electrical storage device while allowing effective use of the heat generated by the drive device.

The thermal management system according to the first aspect of the present disclosure may further include a shutoff device provided for the radiator and configured to switch between an introducing state in which introduction of outside air into the radiator is allowed and a shutoff state in which the introduction of the outside air into the radiator is shut off. The shutoff device may be switched to the shutoff state when the first circuit is provided.

With this configuration, heat accumulated in the heat medium in the second path of the first circuit is less likely to be dissipated to the outside air via the radiator.

In the thermal management system according to the first aspect of the present disclosure, the electrical apparatus may be an electrified vehicle, and the heating of the electrical storage device may be performed after a traction system of the electrified vehicle is activated.

With this configuration, the temperature of the electrical storage device can be easily increased when the electrified vehicle starts to travel. As a result, the traveling performance of the electrified vehicle can easily become a certain level or higher when the electrified vehicle starts to travel.

In the thermal management system according to the first aspect of the present disclosure, the electrical storage device may be configured such that external charging is performed, the external charging being charging of the electrical storage device with charging power supplied from charging equipment external to the electrical apparatus, and the heating of the electrical storage device may be performed in such a manner that the temperature of the electrical storage device becomes equal to or higher than a predetermined temperature at start of the external charging.

With this configuration, the temperature of the electrical storage device can be easily increased to the predetermined temperature or higher at the start of the external charging. As a result, the charging rate and charging efficiency can be easily become a certain level or higher at the start of the external charging.

The thermal management system according to the first aspect of the present disclosure may further include: a first temperature sensor configured to measure the temperature of the electrical storage device; a second temperature sensor configured to measure a temperature of the heat medium in the first flow path; and a pump configured to circulate the heat medium in the first circuit. The pump may be stopped when a measured value from the first temperature sensor is higher than a measured value from the second temperature sensor during the heating of the electrical storage device with the first circuit provided. The pump may be driven when the measured value from the first temperature sensor is equal to or less than the measured value from the second temperature sensor during the heating of the electrical storage device with the first circuit provided.

With this configuration, when the measured value from the first temperature sensor is higher than the measured value from the second temperature sensor, the pump is stopped, so that the heat medium in the first flow path does not flow. Accordingly, heat of the electrical storage device is less likely to transfer to the heat medium in the first flow path. When the measured value from the first temperature sensor is equal to or less than the measured value from the second temperature sensor, the pump is driven, so that the heat medium in the first flow path flows. Accordingly, heat of the heat medium in the first flow path can be transferred to the electrical storage device.

In the thermal management system according to the first aspect of the present disclosure, the electrical apparatus may be an electrified vehicle. The chiller device may be configured to exchange heat with an air conditioning circuit configured to adjust a cabin temperature of the electrified vehicle. The electrical storage device and the air conditioning circuit may be configured to exchange heat with each other via the chiller device when there is a heating request using the air conditioning circuit during the heating of the electrical storage device.

With this configuration, the heat from self-heating of the electrical storage device can be effectively used in the air conditioning circuit.

In the thermal management system according to the first aspect of the present disclosure, the chiller device may be configured to exchange heat with an air conditioning circuit configured to adjust a cabin temperature of the electrified vehicle. The electrical storage device and the air conditioning circuit may be configured to exchange heat with each other via the chiller device when there is a heating request using the air conditioning circuit during the heating of the electrical storage device.

The thermal management system according to the first aspect of the present disclosure may further include a control device configured to control the switching device.

In the thermal management system according to the first aspect of the present disclosure, the switching device may be an eight-way valve.

According to the present disclosure, it is possible to efficiently perform self-heating of the electrical storage device while allowing effective use of the heat generated by the drive device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows an electrified vehicle equipped with a thermal management system according to a first embodiment;
FIG. 2 shows an example of the overall configuration of the thermal management system according to the first embodiment;
FIG. 3 shows an example of the configuration of a thermal management circuit according to the first embodiment;
FIG. 4 shows the state of the thermal management circuit when heating a battery according to the first embodiment;
FIG. 5 is a flowchart showing a control that is performed by the thermal management system according to the first embodiment;
FIG. 6 shows an example of the overall configuration of a thermal management system according to a second embodiment;
FIG. 7 shows an example of the configuration of a thermal management circuit according to the second embodiment;
FIG. 8A shows the state of the thermal management circuit having a battery heating communication pattern according to the second embodiment;
FIG. 8B shows the state of the thermal management circuit having the battery heating communication pattern according to the second embodiment;
FIG. 9 is a flowchart showing a control that is performed by the thermal management system according to the second embodiment;
FIG. 10 shows an example of the overall configuration of a thermal management system according to a third embodiment;
FIG. 11 shows an example of the configuration of a thermal management circuit according to the third embodiment;
FIG. 12 shows the state of the thermal management circuit having a battery heating communication pattern according to the third embodiment;
FIG. 13 is a flowchart showing a control that is performed by the thermal management system according to the third embodiment;
FIG. 14 shows an example of the overall configuration of a thermal management system according to a fourth embodiment;
FIG. 15 shows an example of the configuration of a thermal management circuit according to the fourth embodiment;
FIG. 16A shows the state of the thermal management circuit having a battery heating communication pattern according to the fourth embodiment;
FIG. 16B shows the state of the thermal management circuit having the battery heating communication pattern according to the fourth embodiment;
FIG. 17 is a flowchart showing a control that is performed by the thermal management system according to the fourth embodiment; and
FIG. 18 shows a circuit configuration including a battery, a converter, an inverter, and a motor.

### DETAILED DESCRIPTION OF EMBODIMENTS

Embodiments of the present disclosure will be described in detail below with reference to the drawings. The same or corresponding parts are denoted by the same signs throughout the drawings, and description thereof will not be repeated.

### First Embodiment

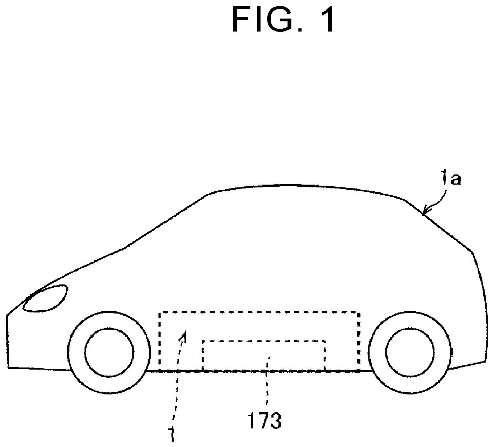

Hereinafter, a configuration in which a thermal management system according to the present disclosure is mounted on an electrified vehicle 1a will be described as an example. FIG. 1 shows the electrified vehicle 1a equipped with a thermal management system 1 according to a first embodiment. As shown in FIG. 1, the electrified vehicle 1a may be a vehicle equipped with a battery 173 for traction. For example, the electrified vehicle 1a is a battery electric vehicle (BEV). The electrified vehicle 1a may be a hybrid electric vehicle (HEV), a plug-in hybrid electric vehicle (PHEV), or a fuel cell electric vehicle (FCEV). However, the thermal management system according to the present disclosure is not limited to vehicle applications. The electrified vehicle 1a is an example of the "electrical apparatus" of the present disclosure.

### Overall Configuration

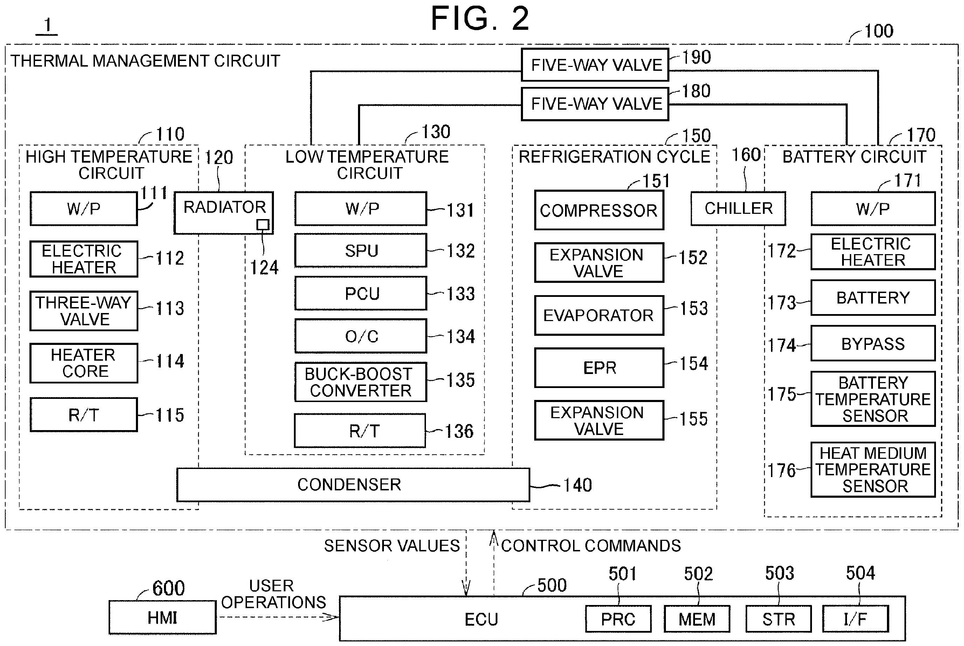

FIG. 2 shows an example of the overall configuration of the thermal management system 1 according to the first embodiment. The thermal management system 1 includes a thermal management circuit 100, an electronic control unit (ECU) 500, and a human machine interface (HMI) 600. The ECU 500 can be considered as an example of the "control device" of the present application.

The thermal management circuit 100 is configured to allow a heat medium to flow therethrough. The thermal management circuit 100 includes, for example, a high temperature circuit 110, a radiator 120, a low temperature circuit 130, a condenser 140, a refrigeration cycle 150, a chiller 160, a battery circuit 170, a five-way valve 180, and a five-way valve 190. Each of the five-way valves 180, 190 is an example of the "switching device" of the present disclosure. The chiller 160 is an example of the "chiller device" of the present disclosure.

The high temperature circuit 110 includes, for example, a water pump (W/P) 111, an electric heater 112, a three-way valve 113, a heater core 114, and a reservoir tank (R/T) 115. The heater core 114 is an example of the "air conditioning circuit" of the present disclosure.

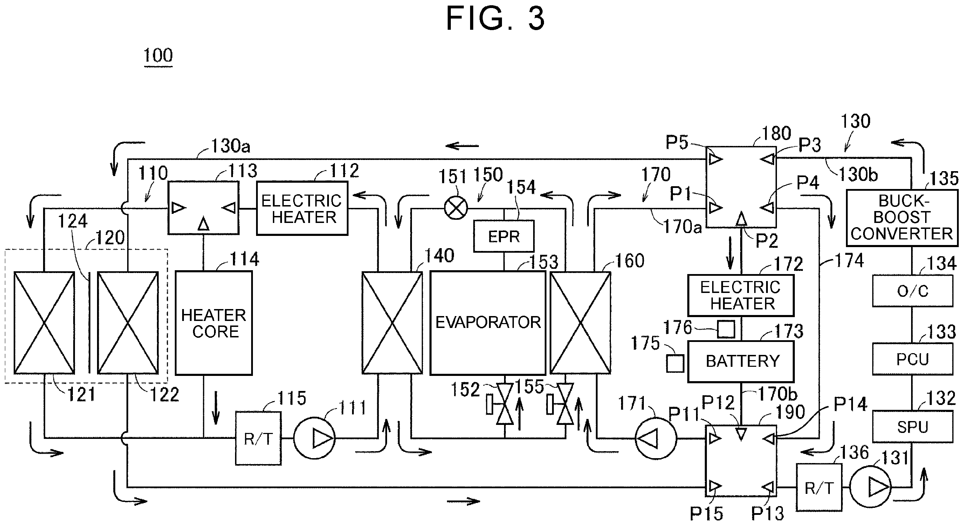

The radiator 120 is connected to (i.e., shared by) both the high temperature circuit 110 and the low temperature circuit 130. The radiator 120 includes a high temperature (HT) radiator 121 and a low temperature (LT) radiator 122 (see FIG. 3). The low temperature radiator 122 is an example of the "radiator" of the present disclosure. The low temperature radiator 122 is provided with a grille shutter 124 (see FIG. 3).

The low temperature circuit 130 includes, for example, a water pump 131, a smart power unit (SPU) 132, a power control unit (PCU) 133, an oil cooler (O/C) 134, a buck-boost converter 135, and a reservoir tank 136. The PCU 133 and the oil cooler 134 are examples of the "drive device" of the present disclosure.

The condenser 140 is connected to both the high temperature circuit 110 and the refrigeration cycle 150.

The refrigeration cycle 150 includes, for example, a compressor 151, an expansion valve 152, an evaporator 153, an evaporative pressure regulator (EPR) 154, and an expansion valve 155.

The chiller 160 is connected to both the refrigeration cycle 150 and the battery circuit 170. The chiller 160 exchanges heat between the heat medium flowing in the battery circuit 170 and the heat medium circulating in the refrigeration cycle 150.

The battery circuit 170 includes, for example, a water pump 171, an electric heater 172, a battery 173, a bypass flow path 174, a battery temperature sensor 175, and a heat medium temperature sensor 176. The water pump 171 and the battery 173 are examples of the "pump" and the "electrical storage device" of the present disclosure, respectively. The battery temperature sensor 175 and the heat medium temperature sensor 176 are examples of the "first temperature sensor" and the "second temperature sensor" of the present disclosure, respectively.

Each of the five-way valves 180, 190 is connected to the low temperature circuit 130 and the battery circuit 170. The configuration of the thermal management circuit 100 will be described in detail later with reference to FIG. 3.

The ECU 500 controls the thermal management circuit 100. The ECU 500 includes a processor 501, a memory 502, a storage 503, and an interface 504.

The processor 501 includes, for example, a central processing unit (CPU) or a micro-processing unit (MPU). The memory 502 includes, for example, a random access memory (RAM). The storage 503 includes a rewritable nonvolatile memory such as a hard disk drive (HDD), a solid state drive (SSD), or a flash memory. The storage 503 stores system programs including an operating system (OS), and control programs including computer-readable codes that are necessary for control calculations. The processor 501 implements various processes by reading the system programs and the control programs, loading them into the memory 502, and executing them. The interface 504 controls communication between the ECU 500 and components of the thermal management circuit 100.

The ECU 500 generates control commands based on sensor values acquired from various sensors (e.g., battery temperature sensor 175 and heat medium temperature sensor 176) included in the thermal management circuit 100, user operations received by the HMI 600, etc., and outputs the generated control commands to the thermal management circuit 100. The ECU 500 may be divided into a plurality of ECUs, one for each function. Although FIG. 2 illustrates an example in which the ECU 500 includes one processor 501, the ECU 500 may include a plurality of processors. The same applies to the memory 502 and the storage 503.

As used herein, the "processor" is not limited to a processor in a narrow sense that performs processes by a stored program method, and may include hardwired circuitry such as an application-specific integrated circuit (ASIC) and a field-programmable gate array (FPGA). Therefore, the term "processor" may be read as processing circuitry that performs processes defined in advance by computer-readable codes and/or hardwired circuitry.

The HMI 600 is, for example, a display with a touch panel, an operation panel, or a console. The HMI 600 receives user operations for controlling the thermal management system 1. The HMI 600 outputs signals indicating user operations to the ECU 500.

### Configuration of Thermal Management Circuit

FIG. 3 shows an example of the configuration of the thermal management circuit 100 according to the first embodiment. The heat medium (usually hot water) circulating in the high temperature circuit 110 flows through either or both of the following two paths: "water pump 111 - condenser 140 - electric heater 112 - three-way valve 113 - heater core 114 - reservoir tank 115 - water pump 111," and "water pump 111 - condenser 140 - electric heater 112 - three-way valve 113 - high temperature radiator 121 - reservoir tank 115 - water pump 111."

The heat medium (coolant) circulating in the low temperature circuit 130 flows through the following path: "water pump 131 - SPU 132 - PCU 133 - oil cooler 134 - buck-boost converter 135 - five-way valve 180 - low temperature radiator 122 - five-way valve 190 - reservoir tank 136 - water pump 131."

The water pump 131 circulates the heat medium in the low temperature circuit 130 according to a control command from the ECU 500. The SPU 132 controls charge and discharge of the battery 173 according to a control command from the ECU 500. The PCU 133 converts direct current (DC) power supplied from the battery 173 to alternating current (AC) power to supply the AC power to a motor (not shown) contained in a transaxle according to a control command from the ECU 500. The oil cooler 134 circulates lubricating oil for the motor by using an electrical oil pump (EOP) (not shown). The oil cooler 134 cools the transaxle through heat exchange between the heat medium circulating in the low temperature circuit 130 and the lubricating oil for the motor. The SPU 132, the PCU 133, the oil cooler 134, and the buck-boost converter 135 are cooled by the heat medium circulating in the low temperature circuit 130. The reservoir tank 136 stores part of the heat medium flowing in the low temperature circuit 130 to maintain the pressure and amount of heat medium in the low temperature circuit 130. Each of the five-way valves 180, 190 switches the path of the heat medium in the low temperature circuit 130 and the battery circuit 170 according to a control command from the ECU 500. The low temperature radiator 122 is disposed near the high temperature radiator 121, and exchanges heat with the high temperature radiator 121. Instead of the oil cooler 134, the transaxle may be provided in the low temperature circuit 130. The grille shutter 124 is configured to switch between a closed state and an open state according to a control signal from the ECU 500. In the closed state, the grille shutter 124 does not allow introduction of outside air into the low temperature radiator 122. In the open state, the grille shutter 124 allows introduction of outside air into the low temperature radiator 122. The grille shutter 124 is an example of the "shutoff device" of the present disclosure.

The heat medium (gas-phase refrigerant or liquid-phase refrigerant) circulating in the refrigeration cycle 150 flows through either or both of the following two paths: "compressor 151 - condenser 140 - expansion valve 152 - evaporator 153 - EPR 154 - compressor 151," and "compressor 151 - condenser 140 - expansion valve 155 - chiller 160 - compressor 151."

The heat medium (coolant) circulating in the battery circuit 170 flows through either or both of the following two paths: "water pump 171 - chiller 160 - five-way valve 180 - electric heater 172 - battery 173 - five-way valve 190 - water pump 171," and "water pump 171 - chiller 160 - five-way valve 180 - bypass flow path 174 - five-way valve 190 - water pump 171."

The water pump 171 circulates the heat medium in the battery circuit 170 according to a control command from the ECU 500. The chiller 160 cools the heat medium circulating in the battery circuit 170 through heat exchange between the heat medium circulating in the refrigeration cycle 150 and the heat medium circulating in the battery circuit 170. The electric heater 172 heats the heat medium according to a control command from the ECU 500. The battery 173 supplies traction power to the motor contained in the transaxle. The battery 173 may be heated with the electric heater 172 or may be cooled with the chiller 160. The bypass flow path 174 is provided to allow the heat medium to bypass the electric heater 172 and the battery 173. When the heat medium flows through the bypass flow path 174, a change in temperature of the heat medium associated with heat absorption and heat dissipation between the heat medium and the battery 173 can be reduced. The battery temperature sensor 175 detects the temperature of the battery 173. The heat medium temperature sensor 176 detects the temperature of the heat medium flowing in the battery circuit 170.

The five-way valve 180 includes five ports P1 to P5. The port P1 is an inlet port into which the heat medium flows from the chiller 160. The port P2 is an outlet port through which the heat medium flows toward the electric heater 172 and the battery 173 of the battery circuit 170. The port P3 is an inlet port into which the heat medium flows from the SPU 132, the PCU 133, the oil cooler 134, and the buck-boost converter 135 of the low temperature circuit 130. The port P4 is an outlet port from which the heat medium flows toward the bypass flow path 174 of the battery circuit 170. The port P5 is an outlet port from which the heat medium flows toward the low temperature radiator 122.

The five-way valve 190 includes five ports P11 to P 15. The port P11 is an outlet port from which the heat medium flows toward the chiller 160. The port P12 is an inlet port into which the heat medium flows from the electric heater 172 and the battery 173 of the battery circuit 170. The port P13 is an outlet port from which the heat medium flows toward the SPU 132, the PCU 133, the oil cooler 134, and the buck-boost converter 135 of the low temperature circuit 130. The port P14 is an inlet port into which the heat medium flows from the bypass flow path 174 of the battery circuit 170. The port P15 is an inlet port into which the heat medium flows from the low temperature radiator 122.

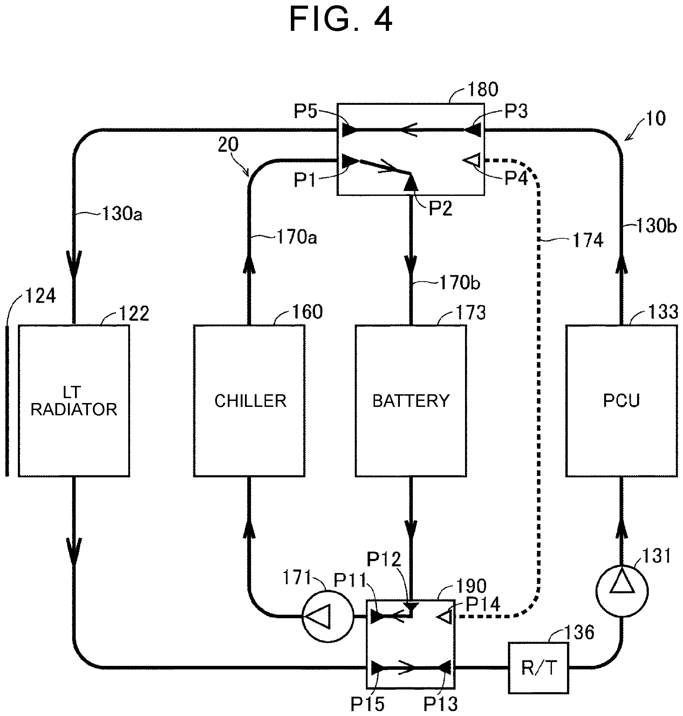

FIG. 4 shows the state of the thermal management circuit when heating the battery 173 according to the first embodiment. As shown in FIG. 4, the battery 173 is provided in a flow path 170b of the battery circuit 170. The battery 173 exchanges heat with the heat medium in the flow path 170b. The flow path 170b is in thermal contact with the battery 173. The flow path 170b is a flow path connecting the port P2 of the five-way valve 180 and the port P12 of the five-way valve 190. The flow path 170b is an example of the "first flow path" of the present disclosure.

The low temperature radiator 122 is provided in a flow path 130a of the low temperature circuit 130. The flow path 130a is a flow path connecting the port P5 of the five-way valve 180 and the port P15 of the five-way valve 190. The flow path 130a is an example of the "third flow path" of the present disclosure.

The water pump 131, the SPU 132, the PCU 133, the oil cooler 134, the buck-boost converter 135, and the reservoir tank 136 are provided in a flow path 130b of the low temperature circuit 130. The PCU 133, the oil cooler 134, etc. exchange heat with the heat medium in the flow path 130b. The flow path 130b is in thermal contact with the SPU 132, the PCU 133, the oil cooler 134, and the buck-boost converter 135. The flow path 130b is a flow path connecting the port P3 of the five-way valve 180 and the port P13 of the five-way valve 190. The flow path 130b is an example of the "second flow path" of the present disclosure.

The chiller 160 is provided in a flow path 170a of the battery circuit 170. The flow path 170a is a flow path connecting the port P1 of the five-way valve 180 and the port P11 of the five-way valve 190. The flow path 170a is an example of the "fourth flow path" of the present disclosure.

### Communication Patterns

FIG. 4 shows an overview of a predetermined communication pattern (hereinafter sometimes referred to as "battery heating communication pattern") of the thermal management circuit 100 that is formed by controlling the five-way valves 180, 190. The battery heating communication pattern is an example of the "first circuit" of the present disclosure.

Some electrified vehicles are not equipped with an engine. Therefore, there are cases where it is not possible to use engine waste heat to heat a component in an electrified vehicle that is to be heated. Accordingly, it is sometimes desired to effectively use heat from a drive device including an inverter and a motor. It is also desired to efficiently perform self-heating of an electrical storage device. That is, it is desired to efficiently perform self-heating of the electrical storage device while allowing effective use of the heat generated by the drive device.

In the first embodiment, the ECU 500 sets the grille shutter 124 to the closed state and forms the battery heating communication pattern shown in FIG. 4 when heating the battery 173. In the battery heating communication pattern, the five-way valve 180 forms a path connecting the port P1 and the port P2 and a path connecting the port P3 and the port P5.

In the battery heating communication pattern, the five-way valve 190 forms a path connecting the port P11 and the port P12 and a path connecting the port P13 and the port P15.

As a result, a closed circuit 20 and a closed circuit 10 are formed. The closed circuit 20 has a first path in which the heat medium circulates through the flow path 170a and the flow path 170b. The closed circuit 10 has a second path in which the heat medium circulates through the flow path 130a and the flow path 130b.

When the battery 173 is used in the battery heating communication pattern shown in FIG. 4, heat from self-heating of the battery 173 is accumulated (stored) in the closed circuit 20. In this case, the chiller 160 does not perform heat exchange, but may perform heat exchange according to a heat request for air conditioning.

The PCU 133 and the transaxle (not shown) also generate heat during self-heating of the battery 173. The heat generated by the PCU 133 and the transaxle is accumulated (stored) in the closed circuit 10. Since the grille shutter 124 of the low temperature radiator 122 is set to the closed state, the heat accumulated in the closed circuit 10 is less likely to be dissipated in the low temperature radiator 122. The heat accumulated in the closed circuit 10 can be used to warm up various devices.

As a result, it is possible to efficiently perform self-heating of the battery 173 while allowing effective use of the heat generated by the drive device such as the PCU 133.

### Method for Controlling Thermal Management Circuit

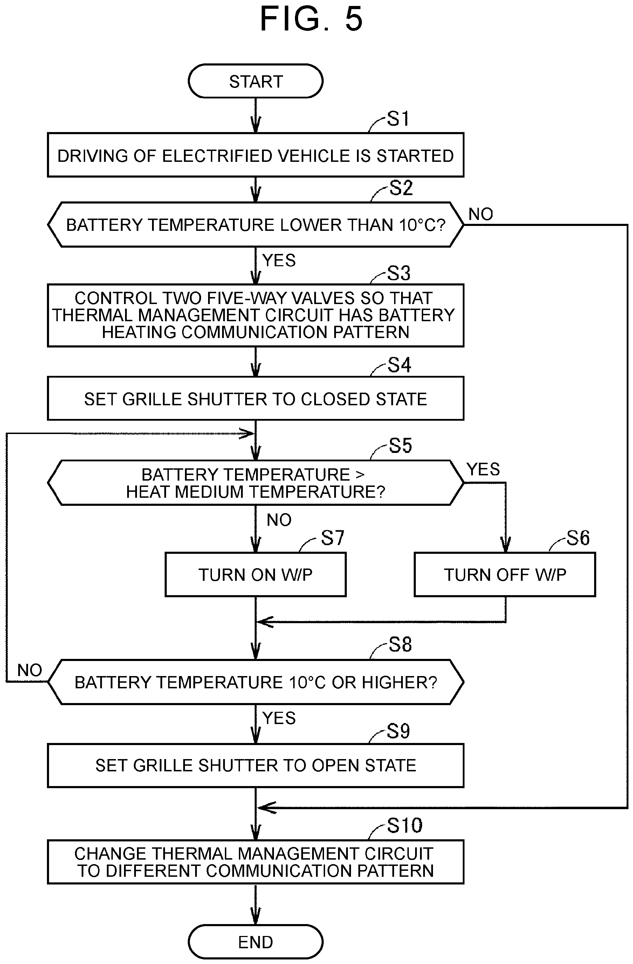

A control method of the thermal management system 1 will be described with reference to FIG. 5. FIG. 5 is a flowchart showing a control that is performed by the thermal management system 1 according to the first embodiment. The flow shown in FIG. 5 is merely illustrative, and the control in the present disclosure is not limited to the example shown in FIG. 5.

In step S1, driving of the electrified vehicle 1a is started (traction system is activated). Specifically, a start button, not shown, of the electrified vehicle 1a is pressed, so that the PCU 133 and the battery 173 are electrically connected (by a system main relay (SMR), not shown). By receiving a predetermined internal signal of the electrified vehicle 1a, the ECU 500 detects that driving of the electrified vehicle 1a has been started.

In step S2, the ECU 500 determines whether the temperature of the battery 173 detected by the battery temperature sensor 175 is lower than 10°C. When the temperature of the battery 173 is lower than 10°C (Yes in S2), the process proceeds to step S3. When the temperature of the battery 173 is equal to or higher than 10°C (No in S2), the process proceeds to step S10. The threshold in step S2 may be a value other than 10°C.

In step S3, the ECU 500 controls the five-way valves 180, 190 so that the thermal management circuit 100 has the battery heating communication pattern shown in FIG. 4.

In step S4, the ECU 500 sets the grille shutter 124 to the closed state. This reduces introduction of outside air into the low temperature radiator 122. As a result, the amount of heat that is exchanged with the outside air in the low temperature radiator 122 decreases compared to when the grille shutter 124 is in the open state.

In step S5, the ECU 500 determines whether the temperature of the battery 173 detected by the battery temperature sensor 175 is higher than the temperature of the heat medium flowing in the battery circuit 170 detected by the heat medium temperature sensor 176. When the temperature of the battery 173 is higher than the temperature of the heat medium (Yes in S5), the process proceeds to step S6. When the temperature of the battery 173 is equal to or lower than the temperature of the heat medium (No in S5), the process proceeds to step S7.

In step S6, the ECU 500 turns off the water pump 171. When the water pump 171 is already off, the ECU 500 keeps the water pump 171 off. This reduces dissipation of heat generated by the battery 173 to the heat medium. The process then proceeds to step S8.

In step S7, the ECU 500 turns on the water pump 171. When the water pump 171 is already on, the ECU 500 keeps the water pump 171 on. This allows the heat of the heat medium in the battery circuit 170 to be accumulated (stored) in the battery 173. The process then proceeds to step S8.

In step S8, the ECU 500 determines whether the temperature of the battery 173 detected by the battery temperature sensor 175 is equal to or higher than 10°C. When the temperature of the battery 173 is equal to or higher than 10°C (Yes in S8), the process proceeds to step S9. When the temperature of the battery 173 is lower than 10°C (No in S8), the process returns to step S5. The threshold in step S8 may be a value other than 10°C as long as it is equal to or higher than the threshold in step S2.

In step S9, the ECU 500 sets the grille shutter 124 to the open state. This allows introduction of outside air into the low temperature radiator 122. As a result, the amount of heat that is exchanged with the outside air in the low temperature radiator 122 increases compared to when the grille shutter 124 is in the closed state.

In step S10, the ECU 500 controls the five-way valves 180, 190 to change the communication pattern of the thermal management circuit 100 from the battery heating communication pattern shown in FIG. 4 to a different communication pattern (e.g., a communication pattern suitable for traveling of the electrified vehicle 1a). The process then ends.

As described above, in the first embodiment, the ECU 500 forms the closed circuit 20 having the first path in which the heat medium circulates through the flow paths 170a, 170b and the closed circuit 10 having the second path in which the heat medium circulates through the flow paths 130a, 130b and sets the grille shutter 124 to the closed state during the heating control of the battery 173. The heat from self-heating of the battery 173 can thus be stored in the closed circuit 20. The heat generated by the PCU 133 can be stored in the closed circuit 10. Therefore, the heat accumulated in the closed circuit 10 can be used to warm up various devices. As a result, it is possible to efficiently perform self-heating of the battery 173 while allowing effective use of the heat generated by the PCU 133. Moreover, for example, the difference in temperature of the heat medium between the closed circuit 10 and the closed circuit 20 can be reduced by the self-heating of the battery 173 and the heat generated by the PCU 133. Therefore, the temperature of the heat medium is less likely to decrease rapidly when, for example, the communication pattern is changed from the battery heating communication pattern to a different communication pattern and either or both of the flow paths 170a, 170b are connected to either or both of the flow paths 130a, 130b.

When it is determined that there is a request to turn on the heater (an example of "heating request" of the present disclosure) such as when a button for turning on the heater is pressed by a user of the electrified vehicle 1a or when the cabin temperature is lower than a set temperature, the compressor 151 is turned on when the water pump 171 is on. In this case, the heat from the battery 173 is supplied via the chiller 160 to the heater core 114 serving as an air conditioning circuit. That is, when the compressor 151 is on, heat is exchanged between the battery 173 and the heater core 114 via the chiller 160. When the compressor 151 is off, heat is not exchanged between the battery 173 and the heater core 114 via the chiller 160. The compressor 151 is stopped when the water pump 171 is off. In this case, only the heat in the high temperature circuit 110 is used for the heater of the electrified vehicle 1a. When there is no request to turn on the heater, the heater is turned off. Turning off the heater means turning off the water pump 111, the electric heater 112, etc.

### Second Embodiment

The configuration using the five-way valves 180, 190 as a switching device is described in the first embodiment. However, the configuration of the switching device according to the present disclosure is not limited to this. The configuration in which the switching device according to the present disclosure is an eight-way valve will be described in a second embodiment.

### Overall Configuration

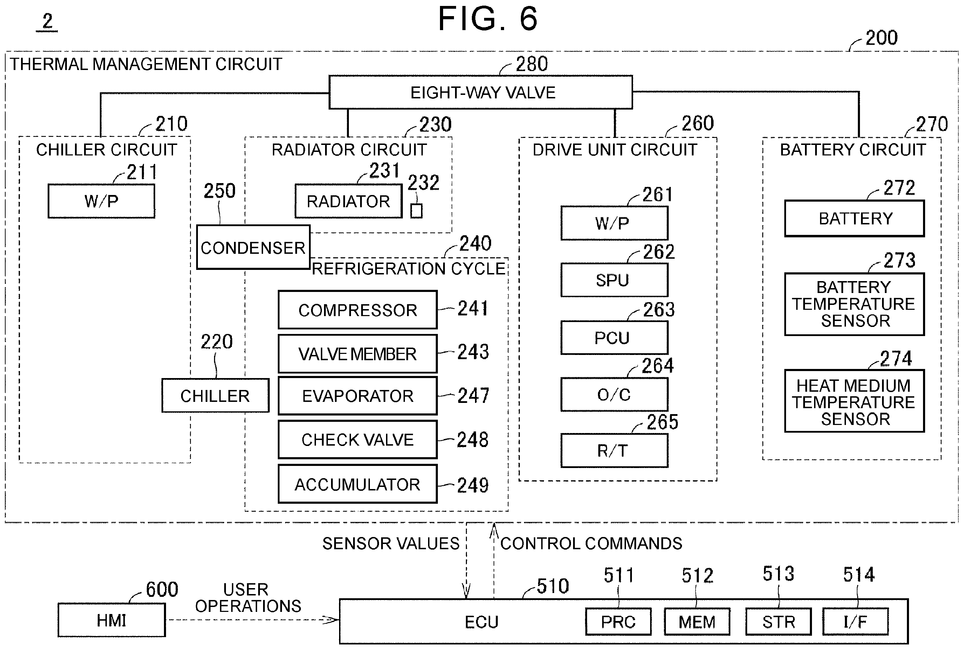

FIG. 6 shows an example of the overall configuration of a thermal management system 2 according to the second embodiment. The thermal management system 2 is different from the thermal management system 1 (see FIG. 2) according to the first embodiment in that the thermal management system 2 includes a thermal management circuit 200 instead of the thermal management circuit 100 and includes an ECU 510 instead of the ECU 500. The ECU 510 can be considered as an example of the "control device" of the present disclosure.

The thermal management circuit 200 includes, for example, a chiller circuit 210, a chiller 220, a radiator circuit 230, a refrigeration cycle 240, a condenser 250, a drive unit circuit 260, a battery circuit 270, and an eight-way valve 280. The eight-way valve 280 is an example of the "switching device" of the present disclosure. The chiller 220 and the refrigeration cycle 240 are examples of the "chiller device" and the "air conditioning circuit" of the present disclosure, respectively.

The chiller circuit 210 includes a water pump (W/P) 211. The chiller 220 is connected to (shared by) both the chiller circuit 210 and the refrigeration cycle 240. The water pump 211 is an example of the "pump" of the present disclosure.

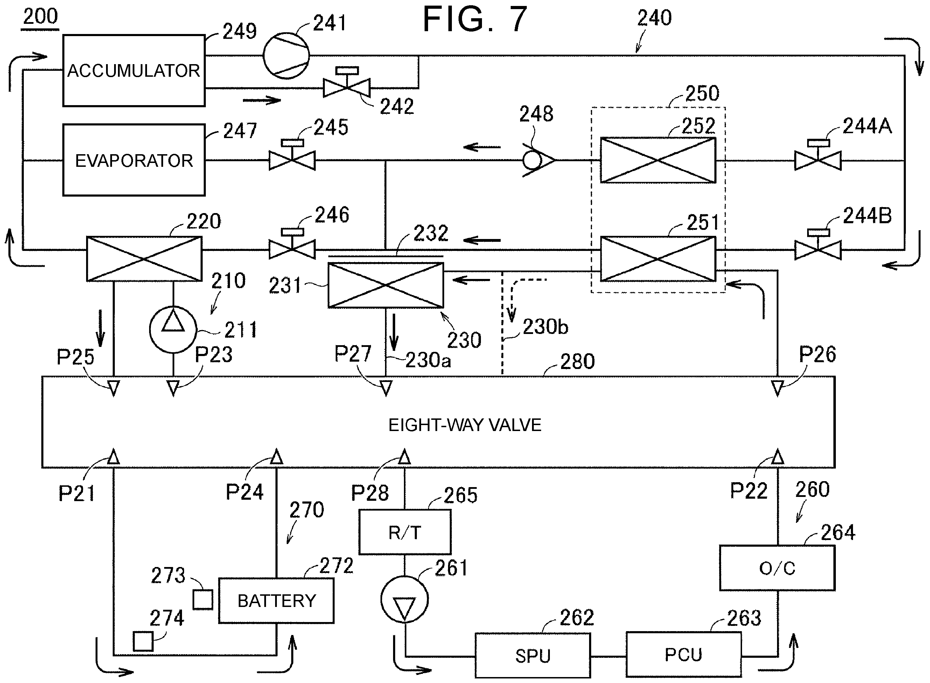

The radiator circuit 230 includes a radiator 231 and a grille shutter 232. The radiator 231 is provided with the grille shutter 232 (see FIG. 7). The refrigeration cycle 240 includes, for example, a compressor 241, a valve member 243, an evaporator 247, a check valve 248, and an accumulator 249. The valve member 243 includes an electromagnetic valve 242 (see FIG. 7), electromagnetic valves 244A, 244B, 245, and 246 (see FIG. 7). The condenser 250 includes a water-cooled condenser 251 and an air-cooled condenser 252 (see FIG. 7), and the water-cooled condenser 251 is connected to both the refrigeration cycle 240 and the radiator circuit 230.

The drive unit circuit 260 includes, for example, a water pump 261, an SPU 262, a PCU 263, an oil cooler 264, and a reservoir tank 265. Instead of the oil cooler 264, a transaxle may be provided in the drive unit circuit 260. The PCU 263 and the oil cooler 264 are examples of the "drive device" of the present disclosure. A system including the PCU 263, the oil cooler 264, and a battery 272 is an example of the "traction system" of the present disclosure.

The battery circuit 270 includes, for example, the battery 272, a battery temperature sensor 273, and a heat medium temperature sensor 274. The battery 272 is an example of the "electrical storage device" of the present disclosure. The battery temperature sensor 273 and the heat medium temperature sensor 274 are examples of the "first temperature sensor" and the "second temperature sensor" of the present disclosure, respectively.

The eight-way valve 280 includes eight ports P21 to P28 (see FIG. 7), and is connected to the chiller circuit 210, the radiator circuit 230, the drive unit circuit 260, and the battery circuit 270.

The ECU 510 controls the thermal management circuit 200. The ECU 510 includes a processor 511, a memory 512, a storage 513, and an interface 514.

### Configuration of Thermal Management Circuit

FIG. 7 shows an example of the configuration of the thermal management circuit 200 according to the second embodiment. A heat medium circulating in the chiller circuit 210 flows through the following path: "eight-way valve 280 (port P23) - water pump 211 - chiller 220 - eight-way valve 280 (port P25)."

The water pump 211 circulates the heat medium in the chiller circuit 210 according to a control command from the ECU 510. The chiller 220 exchanges heat between the heat medium circulating in the chiller circuit 210 and the heat medium circulating in the refrigeration cycle 240. The eight-way valve 280 switches the path to which the chiller circuit 210 is connected according to a control command from the ECU 510. The switching of the path by the eight-way valve 280 will be discussed in detail later.

In the example shown in FIG. 7, the heat medium circulating in the radiator circuit 230 flows through the following path: "eight-way valve (port P26) - water-cooled condenser 251 - radiator 231 - eight-way valve 280 (port P27)." The radiator 231 is disposed downstream of the grille shutter 232, and exchanges heat between air outside the vehicle and the heat medium. Since the configuration of the grille shutter 232 is the same as the configuration of the grille shutter 124 in the first embodiment, detailed description thereof will not be repeated. The path of the heat medium circulating in the radiator circuit 230 may include the following path: "eight-way valve (port P26) - water-cooled condenser 251 - bypass flow path 230b - eight-way valve 280 (port P27)."

The heat medium (gas-phase refrigerant or liquid-phase refrigerant) circulating in the refrigeration cycle 240 flows through one of the following paths: a path of "compressor 241 - electromagnetic valve 244A - air-cooled condenser 252 - check valve 248 - electromagnetic valve (expansion valve) 245 - evaporator 247 - accumulator 249 - compressor 241," a path of "compressor 241 - electromagnetic valve 244A - air-cooled condenser 252 - check valve 248 - electromagnetic valve (expansion valve) 246 - chiller 220 - accumulator 249 - compressor 241," a path of "compressor 241 - electromagnetic valve 244B - water-cooled condenser 251 - electromagnetic valve (expansion valve) 245 - evaporator 247 - accumulator 249 - compressor 241," and a path of "compressor 241 - electromagnetic valve 244B - water-cooled condenser 251 - electromagnetic valve 246 - chiller 220 - accumulator 249 - compressor 241."

The compressor 241 compresses the gas-phase refrigerant circulating in the refrigeration cycle 240 according to a control command from the ECU 510. The electromagnetic valve 242 is connected in parallel with the compressor 241, and adjusts the amount of gas-phase refrigerant flowing into the compressor 241 according to a control command from the ECU 510. The electromagnetic valves 244A, 244B selectively allow the gas-phase refrigerant discharged from the compressor 241 to flow into either the water-cooled condenser 251 or the air-cooled condenser 252 according to a control command from the ECU 510. The water-cooled condenser 251 exchanges heat between the gas-phase refrigerant discharged from the compressor 241 and the heat medium flowing in the radiator circuit 230. The air-cooled condenser 252 exchanges heat with air introduced into a vehicle cabin to produce warm air. The electromagnetic valve 245 restricts the flow of the liquid-phase refrigerant into the evaporator 247 according to a control command from the ECU 510. The electromagnetic valve 246 restricts the flow of the liquid-phase refrigerant into the chiller 220 according to a control command from the ECU 510. The electromagnetic valves 245, 246 also have a function to expand the liquid-phase refrigerant. The accumulator 249 removes the liquid-phase refrigerant from the refrigerant in a gas-liquid mixed state. The accumulator 249 thus reduces or eliminates the possibility that the liquid-phase refrigerant may be sucked into the compressor 241 when the refrigerant is not completely evaporated by the evaporator 247.

The heat medium (coolant) circulating in the drive unit circuit 260 flows through the following path: "eight-way valve 280 (port P28) - reservoir tank 265 - water pump 261 - SPU 262 - PCU 263 - oil cooler 264 - eight-way valve 280 (port P22)."

The water pump 261 circulates the heat medium in the drive unit circuit 260 according to a control command from the ECU 510. The SPU 262 controls charge and discharge of the battery 272 according to a control command from the ECU 510. The PCU 263 converts DC power supplied from the battery 272 to AC power to supply the AC power to a motor (not shown) contained in the transaxle according to a control command from the ECU 510. The oil cooler 264 cools the transaxle through heat exchange between the heat medium circulating in the drive unit circuit 260 and lubricating oil for the motor. Heat exchange may be performed between heat generated by supplying power to a stator without rotating a rotor of the motor and the heat medium circulating in the drive unit circuit 260. The SPU 262, the PCU 263, and the oil cooler 264 are cooled by the heat medium circulating in the drive unit circuit 260. The reservoir tank 265 stores part of the heat medium circulating in the drive unit circuit 260 (heat medium that has overflowed due to a pressure increase) to maintain the pressure and amount of heat medium in the drive unit circuit 260.

The heat medium (coolant) circulating in the battery circuit 270 flows through the following path: "eight-way valve 280 (port P21) - battery 272 - eight-way valve 280 (port P24)."

The battery 272 supplies traction power to the motor contained in the transaxle. The battery temperature sensor 273 detects the temperature of the battery 272. The heat medium temperature sensor 274 detects the temperature of the heat medium flowing in the battery circuit 270 (flow path 270a that will be described later).

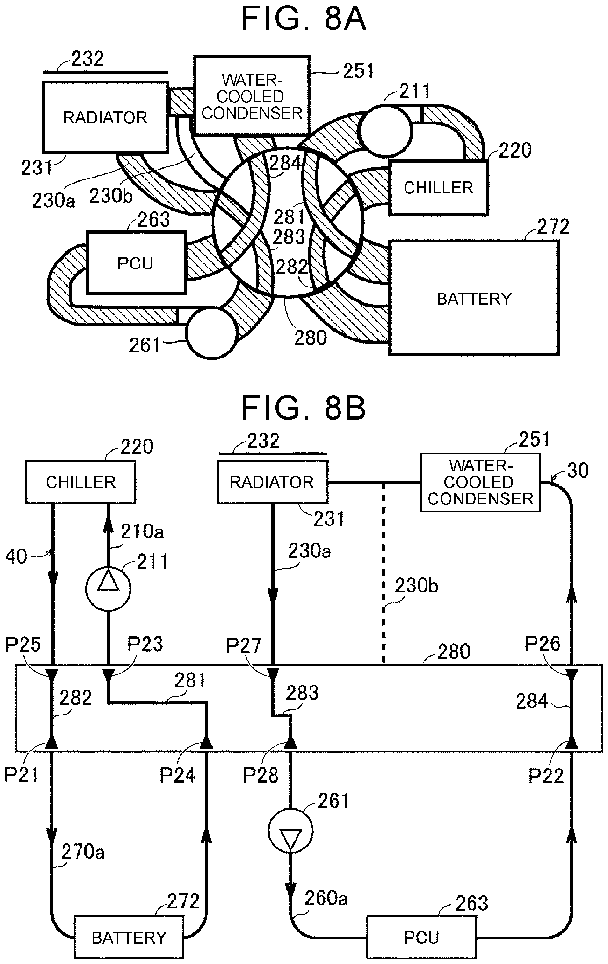

FIGS. 8A and 8B show the state of the thermal management circuit 200 having a battery heating communication pattern according to the second embodiment. FIG. 8A shows an example of the state of the thermal management circuit 200 having the battery heating communication pattern when heating the battery 272. FIG. 8B shows a schematic configuration of the thermal management circuit 200.

As shown in FIGS. 8A and 8B, the chiller 220 is provided in a flow path 210a (see FIG. 8B) of the chiller circuit 210. The flow path 210a is a flow path connecting the ports P23, P25 of the eight-way valve 280. The flow path 210a is an example of the "fourth flow path" of the present disclosure.

The radiator 231 is provided in a flow path 230a (see FIG. 8B) of the radiator circuit 230. The flow path 230a connects the radiator 231 and the eight-way valve 280. The flow path 230a is in parallel with the bypass flow path 230b. The bypass flow path 230b connects a portion between the water-cooled condenser 251 and the radiator 231 and the eight-way valve 280. When the heat medium flows through the bypass flow path 230b, the heat medium does not flow through the radiator 231 (flow path 230a). When the heat medium flows through the radiator 231 (flow path 230a), the heat medium does not flow through the bypass flow path 230b. The flow path 230a is an example of the "third flow path" of the present disclosure.

The water pump 261, the SPU 262, the PCU 263, the oil cooler 264, and the reservoir tank 265 (only the water pump 261 and the PCU 263 are representatively shown in FIGS. 8A and 8B) are provided in a flow path 260a (see FIG. 8B) of the drive unit circuit 260. The flow path 260a is a flow path connecting the ports P28, P22 of the eight-way valve 280. The flow path 260a is an example of the "second flow path" of the present disclosure.

The battery 272 is provided in the flow path 270a (see FIG. 8B) of the battery circuit 270. The flow path 270a is a flow path connecting the ports P21, P24 of the eight-way valve 280. The flow path 270a is an example of the "first flow path" of the present disclosure.

### Communication Patterns

FIGS. 8A and 8B show an overview of the battery heating communication pattern formed by the eight-way valve 280. In the battery heating communication pattern (see FIGS. 8A and 8B), an internal flow path 281 of the eight-way valve 280 forms a path connecting the port P23 and the port P24. In the battery heating communication pattern, an internal flow path 282 of the eight-way valve 280 forms a path connecting the port P21 and the port P25. In the battery heating communication pattern, an internal flow path 283 of the eight-way valve 280 forms a path connecting the port P27 and the port P28. In the battery heating communication pattern, an internal flow path 284 of the eight-way valve 280 forms a path connecting the port P22 and the port P26. In the battery heating communication pattern, the flow path 230a is connected to the port P27 of the eight-way valve 280, and the bypass flow path 230b is blocked at its end.

As a result, a closed circuit 40 (see FIG. 8B) and a closed circuit 30 (see FIG. 8B) are formed. The closed circuit 40 has a first path in which the heat medium circulates through the following paths: the flow path 210a where the chiller 220 is provided, and the flow path 270a where the battery 272 etc. are provided. The closed circuit 30 has a second path in which the heat medium circulates through the following paths: the flow path 230a where the radiator 231 is provided, and the flow path 260a where the PCU 263 etc. are provided. As a result, the heat medium in the closed circuit 30 flows through the following flow path: "radiator 231 - eight-way valve 280 - PCU 263 - eight-way valve 280 - water-cooled condenser 251." The heat medium in the closed circuit 40 flows through the following flow path: "battery 272 - eight-way valve 280 - chiller 220 - eight-way valve 280." A circuit having the closed circuits 30, 40 formed by the battery heating communication pattern is an example of the "first circuit" of the present disclosure.

As shown in FIG. 8A, the eight-way valve 280 has a circular shape as viewed perpendicularly to the plane of the paper. The eight-way valve 280 includes a rotating element inside a housing. The rotating element has the internal flow paths 281, 282, 283, and 284 and is rotatable clockwise or counterclockwise by an actuator (not shown). When the actuator is driven according to a control command from the ECU 510, the rotating element rotates to change the connection of each port. The communication pattern of the thermal management circuit 200 is thus changed.

### Method for Controlling Thermal Management Circuit

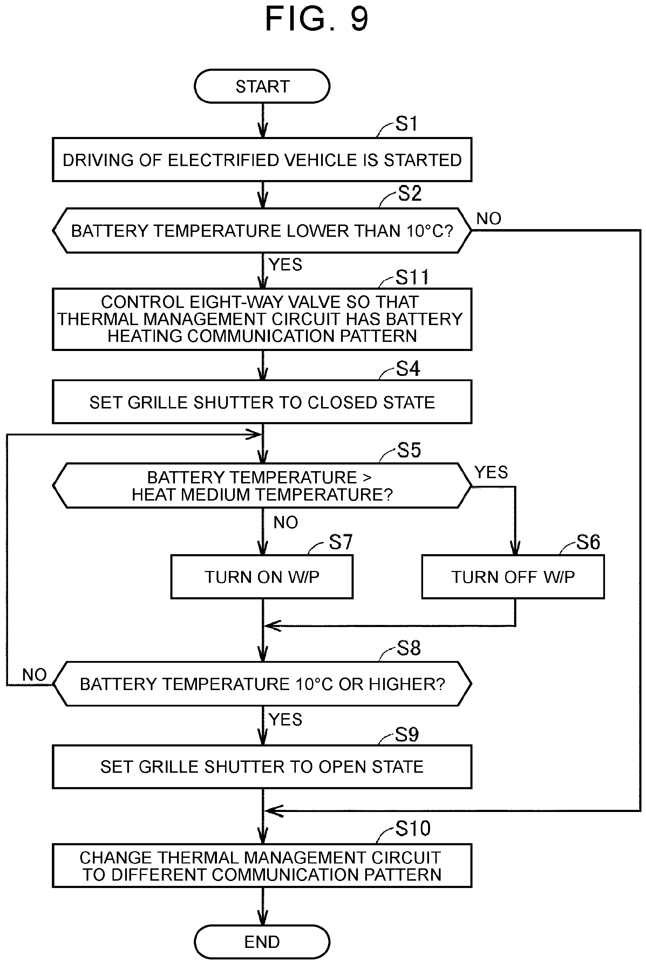

A control method of the thermal management system 2 will be described with reference to FIG. 9. FIG. 9 is a flowchart showing a control that is performed by the thermal management system 2 according to the second embodiment. The flow shown in FIG. 9 is merely illustrative, and the control in the present disclosure is not limited to the example shown in FIG. 9. Description of the same steps as those in the control flow of the first embodiment will be simplified or omitted.

In step S2, the ECU 510 determines whether the temperature of the battery 272 detected by the battery temperature sensor 273 is lower than 10°C. When it is determined that the temperature of the battery 272 detected by the battery temperature sensor 273 is lower than 10°C (Yes in S2), the process proceeds to step S11. When the temperature of the battery 272 is equal to or higher than 10°C (No in S2), the process proceeds to step S10.

In step S11, the ECU 510 controls the eight-way valve 280 so that the thermal management circuit 200 has the battery heating communication pattern shown in FIGS. 8A and 8B. Specifically, the ECU 510 controls the actuator to rotate the rotating element of the eight-way valve 280 to a position that forms the battery heating communication pattern shown in FIGS. 8A and 8B. The process then proceeds to step S4.

Other configurations and effects of the second embodiment are the same as those of the first embodiment. When it is determined while the battery heating communication pattern is formed that there is a request to turn on the heater (an example of the "heating request" of the present disclosure) such as when the button for turning on the heater is pressed by the user of the electrified vehicle 1a or when the cabin temperature is lower than a set temperature, the electromagnetic valve 246 allows the liquid-phase refrigerant to flow into the chiller 220 according to a control command from the ECU 510. In this case, the heat from the battery 272 is supplied via the chiller 220 to the refrigeration cycle 240 serving as an air conditioning circuit. That is, when the electromagnetic valve 246 allows the liquid-phase refrigerant to flow into the chiller 220, heat exchange is performed between the battery 272 and the refrigeration cycle 240 via the chiller 220. When the electromagnetic valve 246 does not allow the liquid-phase refrigerant to flow into the chiller 220, heat exchange is not performed between the battery 272 and the refrigeration cycle 240.

### Third Embodiment

Although the second embodiment uses the eight-way valve 280, a third embodiment uses two six-way valves as a switching device. The same components as those of the second embodiment are denoted by the same signs as those of the second embodiment, and description thereof will not be repeated.

### Overall Configuration

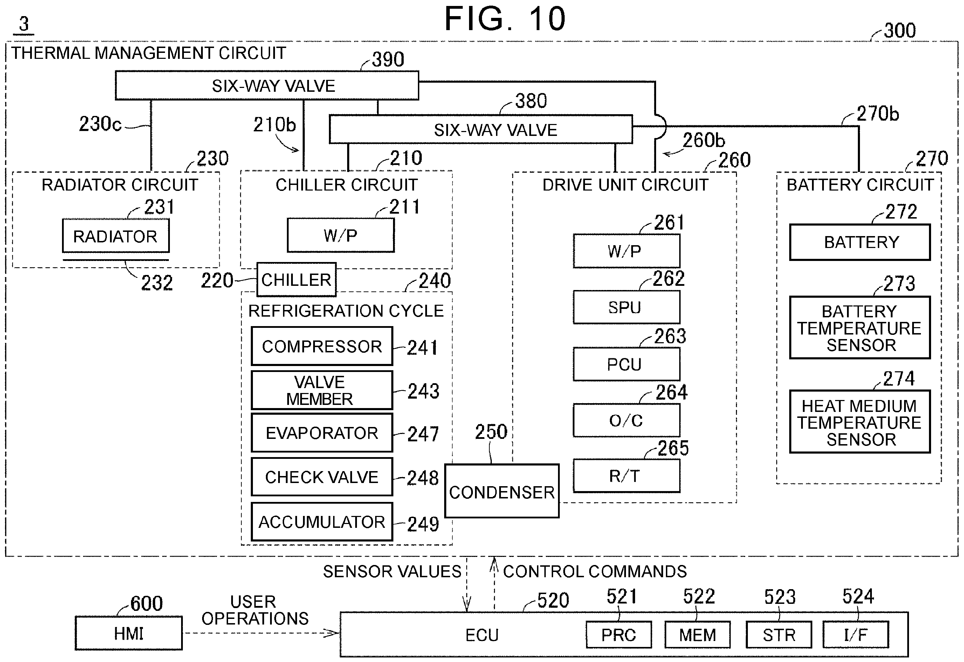

FIG. 10 shows an example of the overall configuration of a thermal management system 3 according to the third embodiment. The thermal management system 3 is different from the thermal management system 2 (see FIG. 6) according to the second embodiment in that the thermal management system 3 includes a thermal management circuit 300 instead of the thermal management circuit 200 and includes an ECU 520 instead of the ECU 510. The ECU 520 can be considered as an example of the "control device" of the present disclosure.

The thermal management circuit 300 includes the chiller circuit 210, the chiller 220, the radiator circuit 230, the refrigeration cycle 240, the condenser 250, the drive unit circuit 260, the battery circuit 270, a six-way valve 380, and a six-way valve 390. Each of the six-way valves 380, 390 is an example of the "switching device" of the present disclosure.

The chiller 220 is provided in a flow path 210b of the chiller circuit 210. The flow path 210b connects the chiller circuit 210 and each of the six-way valves 380, 390. The flow path 210b is an example of the "fourth flow path" of the present disclosure.

The radiator 231 is provided in a flow path 230c. The radiator 231 is provided with the grille shutter 232. The flow path 230c connects the radiator 231 and the six-way valve 390. The flow path 230c is an example of the "third flow path" of the present disclosure.

The water pump 261, the SPU 262, the PCU 263, the oil cooler 264, and the reservoir tank 265 are provided in a flow path 260b of the drive unit circuit 260. The flow path 260b connects the drive unit circuit 260 and each of the six-way valves 380, 390. The flow path 260b is an example of the "second flow path" of the present disclosure.

The battery 272 is provided in a flow path 270b of the battery circuit 270. The flow path 270b connects the battery circuit 270 and the six-way valve 380. The flow path 270b is an example of the "first flow path" of the present disclosure.

The ECU 520 controls the thermal management circuit 300. The ECU 520 includes a processor 521, a memory 522, a storage 523, and an interface 524.

### Configuration of Thermal Management Circuit

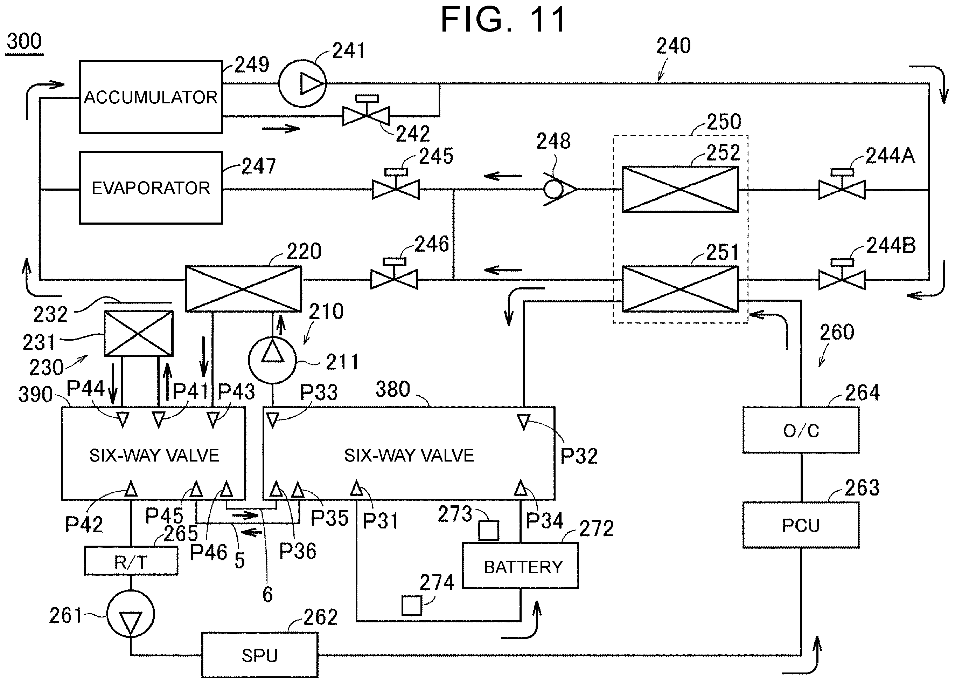

FIG. 11 shows an example of the configuration of the thermal management circuit 300 according to the third embodiment. As shown in FIG. 11, the six-way valve 380 includes six ports P31 to P36. The six-way valve 390 includes six ports P41 to P46.

The six-way valve 380 is connected to the six-way valve 390. Specifically, the port P35 of the six-way valve 380 and the port P45 of the six-way valve 390 are connected by a flow path 5. The port P36 of the six-way valve 380 and the port P46 of the six-way valve 390 are connected by a flow path 6.

A heat medium circulating in the chiller circuit 210 flows through the following path: "six-way valve 380 (port P33) - water pump 211 - chiller 220 - six-way valve 390 (port P43)."

The heat medium circulating in the radiator circuit 230 flows through the following path: "six-way valve 390 (port P41) - radiator 231 - six-way valve 390 (port P44)."

The heat medium (coolant) circulating in the drive unit circuit 260 flows through the following path: "six-way valve 390 (port P42) - reservoir tank 265 - water pump 261 - SPU 262 - PCU 263 - oil cooler 264 - water-cooled condenser 251 - six-way valve 380 (port P32)."

The heat medium (coolant) circulating in the battery circuit 270 flows through the following path: "six-way valve 380 (port P31) - battery 272 - six-way valve 380 (port P34)."

### Communication Patterns

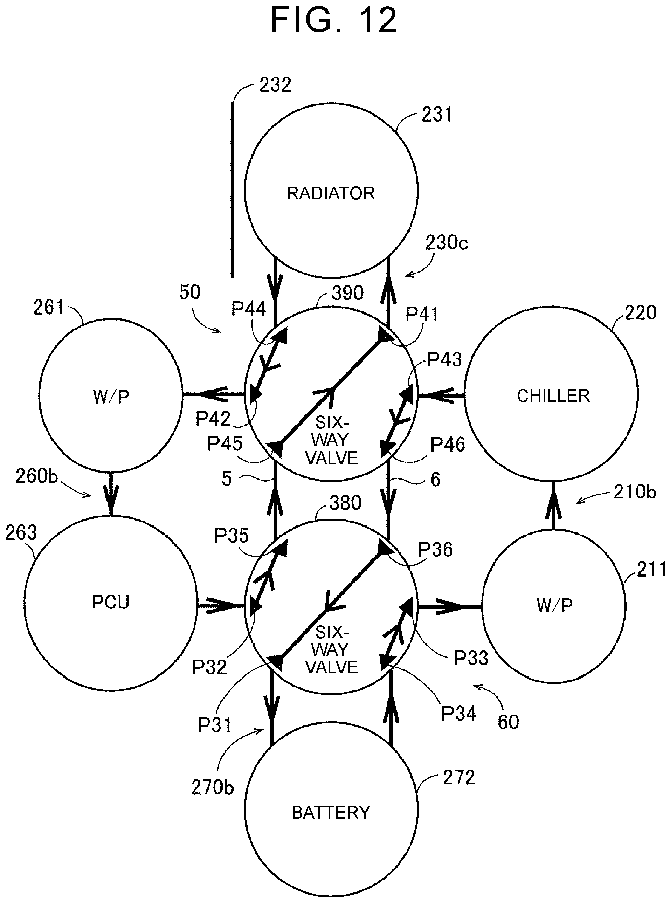

FIG. 12 shows the state of the thermal management circuit 300 having a battery heating communication pattern according to the third embodiment. FIG. 12 shows an overview of the battery heating communication pattern of the thermal management circuit 300 that is formed by controlling the six-way valves 380, 390. In the battery heating communication pattern shown in FIG. 12, the six-way valve 380 forms a path connecting the port P31 and the port P36, a path connecting the port P32 and the port P35, and a path connecting the port P33 and the port P34.

In the battery heating communication pattern shown in FIG. 12, the six-way valve 390 forms a path connecting the port P41 and the port P45, a path connecting the port P42 and the port P44, and a path connecting the port P43 and the port P46.

As a result, a closed circuit 60 and a closed circuit 50 are formed. The closed circuit 60 has a first path in which the heat medium flows through the following paths: the flow path 270b where the battery 272 etc. are provided, the flow path 210b where the chiller 220 etc. are provided, the six-way valve 380, and the six-way valve 390. The closed circuit 50 has a second path in which the heat medium flows through the following paths: the flow path 230c where the radiator 231 etc. are provided, the flow path 260b where the PCU 263 etc. are provided, the six-way valve 380, and the six-way valve 390. A circuit having the closed circuits 50, 60 formed by the battery heating communication pattern shown in FIG. 12 is an example of the "first circuit" of the present disclosure.

### Method for Controlling Thermal Management Circuit

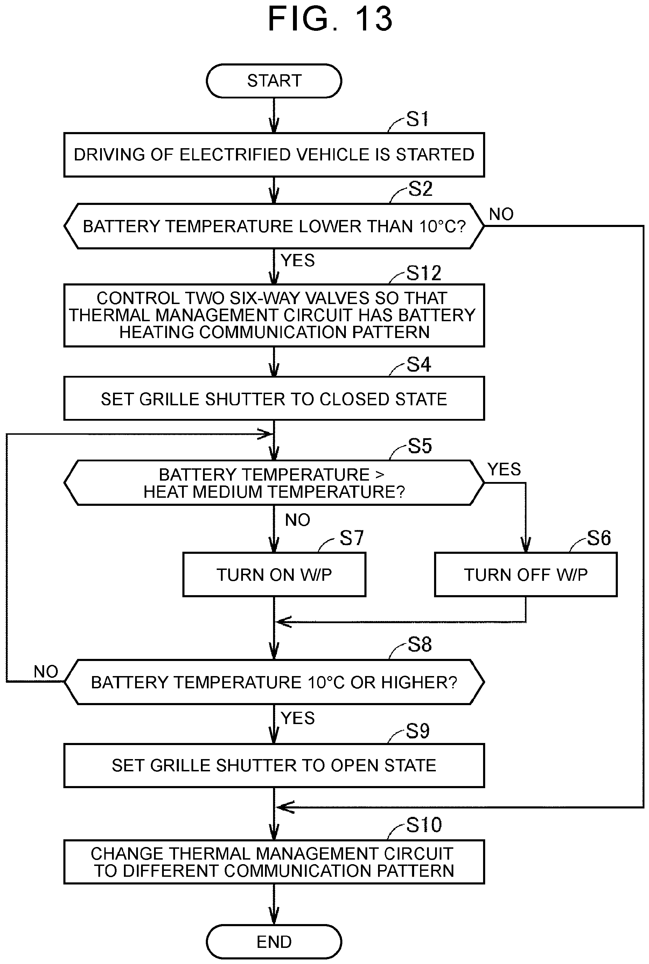

A control method of the thermal management system 3 will be described with reference to FIG. 13. FIG. 13 is a flowchart showing a control that is performed by the thermal management system 3 according to the third embodiment. The flow shown in FIG. 13 is merely illustrative, and the control in the present disclosure is not limited to the example shown in FIG. 13. Description of the same steps as those in the control flow of the second embodiment will be simplified or omitted.

In step S2, the ECU 520 determines whether the temperature of the battery 272 detected by the battery temperature sensor 273 is lower than 10°C. When it is determined that the temperature of the battery 272 detected by the battery temperature sensor 273 is lower than 10°C (Yes in S2), the process proceeds to step S12. When the temperature of the battery 272 is equal to or higher than 10°C (No in S2), the process proceeds to step S10.

In step S12, the ECU 520 controls the six-way valves 380, 390 so that the thermal management circuit 300 has the battery heating communication pattern shown in FIG. 12. The process then proceeds to S4.

In step S10, the ECU 520 controls the six-way valves 380, 390 to change the communication pattern of the thermal management circuit 300 from the battery heating communication pattern shown in FIG. 12 to a different communication pattern (e.g., a communication pattern suitable for traveling of the electrified vehicle 1a). The process then ends.

Other configurations and effects of the third embodiment are the same as those of the second embodiment.

### Fourth Embodiment

Although the third embodiment uses the six-way valves 380, 390, a fourth embodiment uses a ten-way valve as a switching device. The same components as those of the third embodiment are denoted by the same signs as those of the third embodiment, and description thereof will not be repeated.

### Overall Configuration

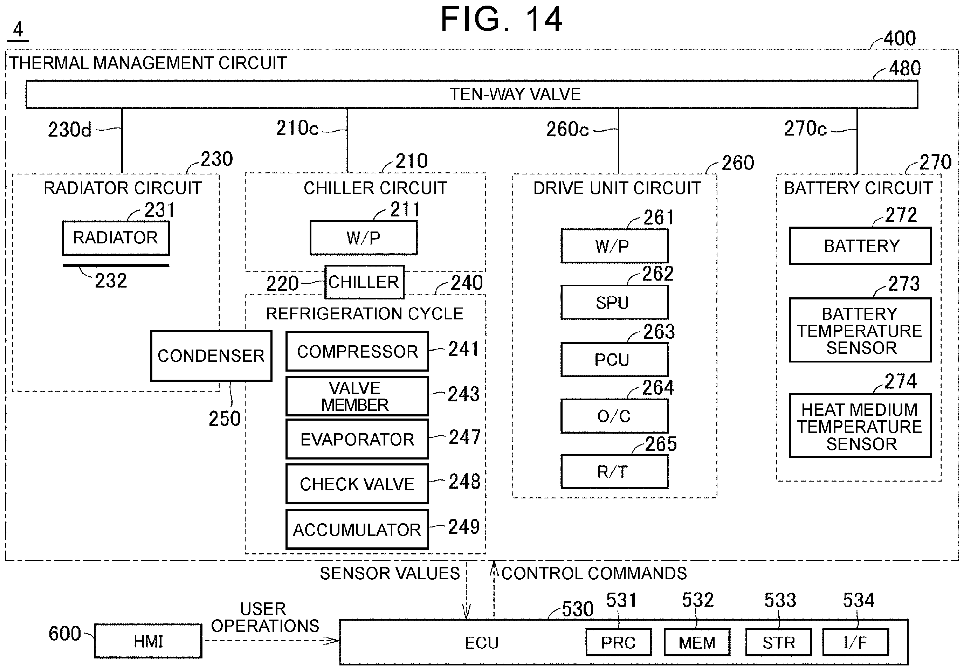

FIG. 14 shows an example of the overall configuration of a thermal management system 4 according to the fourth embodiment. The thermal management system 4 is different from the thermal management system 3 (see FIG. 10) according to the third embodiment in that the thermal management system 4 includes a thermal management circuit 400 instead of the thermal management circuit 300 and includes an ECU 530 instead of the ECU 520. The ECU 530 can be considered as an example of the "control device" of the present disclosure.

The thermal management circuit 400 includes the chiller circuit 210, the chiller 220, the radiator circuit 230, the refrigeration cycle 240, the condenser 250, the drive unit circuit 260, the battery circuit 270, a ten-way valve 480. The ten-way valve 480 is an example of the "switching device" of the present disclosure.

The chiller 220 is provided in a flow path 210c of the chiller circuit 210. The flow path 210c connects the chiller circuit 210 and the ten-way valve 480. The flow path 210c is an example of the "fourth flow path" of the present disclosure.

The radiator 231 is provided in a flow path 230d. The radiator 231 is provided with the grille shutter 232. The flow path 230d connects the radiator 231 and the ten-way valve 480. The flow path 230d is an example of the "third flow path" of the present disclosure.

The water pump 261, the SPU 262, the PCU 263, the oil cooler 264, and the reservoir tank 265 are provided in a flow path 260c of the drive unit circuit 260. The flow path 260c connects the drive unit circuit 260 and the ten-way valve 480. The flow path 260c is an example of the "second flow path" of the present disclosure.

The battery 272 is provided in a flow path 270c of the battery circuit 270. The flow path 270c connects the battery circuit 270 and the ten-way valve 480. The flow path 270c is an example of the "first flow path" of the present disclosure.

The ECU 530 controls the thermal management circuit 400. The ECU 530 includes a processor 531, a memory 532, a storage 533, and an interface 534.

### Configuration of Thermal Management Circuit

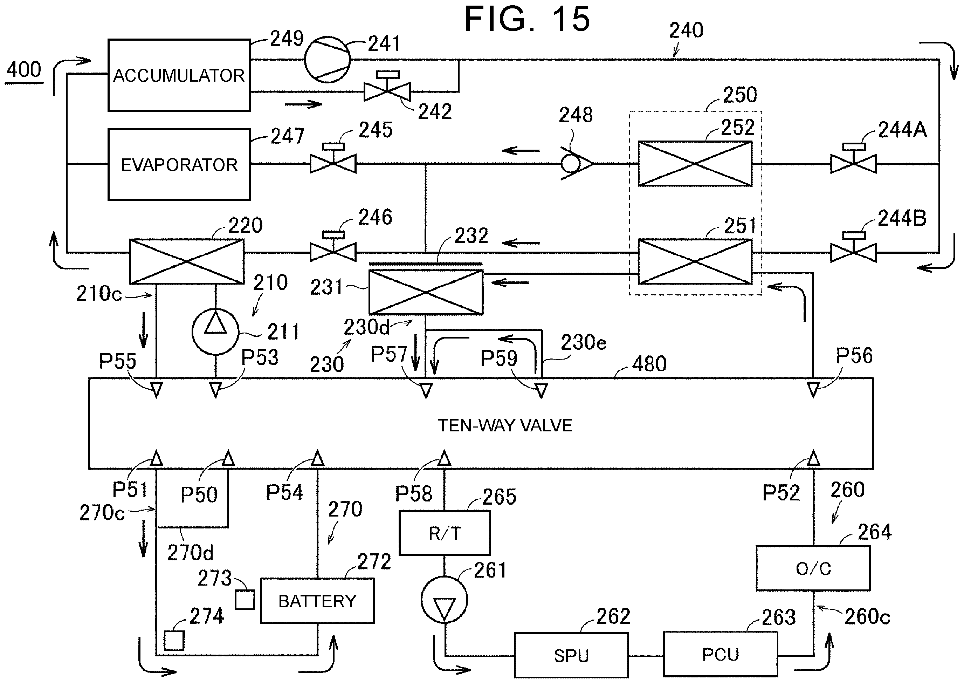

FIG. 15 shows an example of the configuration of the thermal management circuit 400 according to the fourth embodiment. As shown in FIG. 15, the ten-way valve 480 includes six ports P50 to P59.

A heat medium circulating in the chiller circuit 210 flows through the following path: "ten-way valve 480 (port P53) - water pump 211 - chiller 220 - ten-way valve 480 (port P55)."

The heat medium circulating in the radiator circuit 230 flows through the following path: "ten-way valve 480 (port P56) - water-cooled condenser 251 - radiator 231 - ten-way valve 480 (port P57)."

The heat medium (coolant) circulating in the drive unit circuit 260 flows through the following path: "ten-way valve 480 (port P58) - reservoir tank 265 - water pump 261 - SPU 262 - PCU 263 - oil cooler 264 - ten-way valve 480 (port P52)."

The heat medium (coolant) circulating in the battery circuit 270 flows through the following path: "ten-way valve 480 (port P51) - battery 272 - ten-way valve 480 (port P54)."

### Communication Patterns

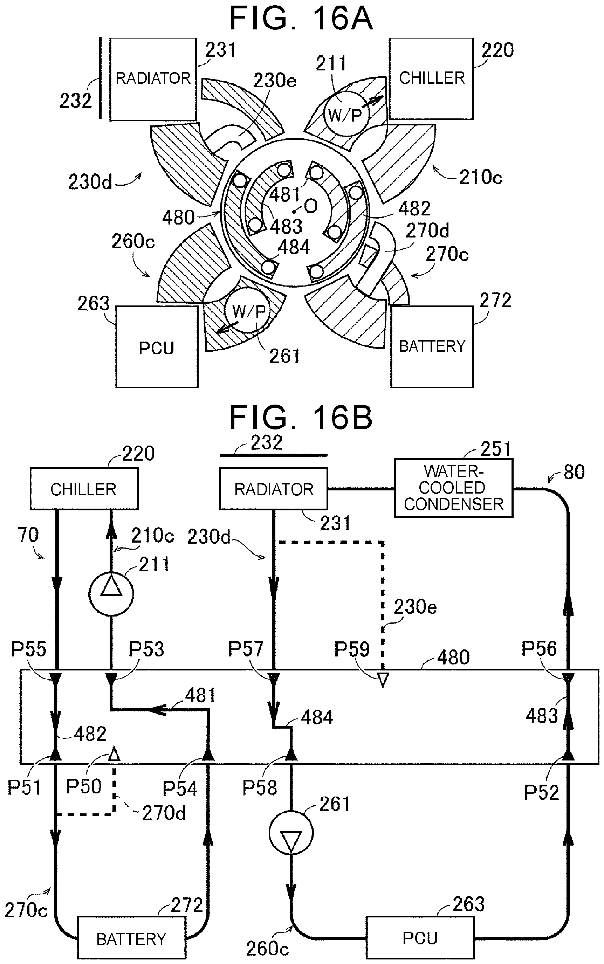

FIGS. 16A and 16B show the state of the thermal management circuit 400 having a battery heating communication pattern according to the fourth embodiment. FIG. 16A shows an example of the state of the thermal management circuit 400 having the battery heating communication pattern when heating the battery 272. FIG. 16B shows a schematic configuration of the thermal management circuit 400.

In the battery heating communication pattern shown in FIGS. 16A and 16B, the ten-way valve 480 forms a path connecting the port P51 and the port P55 (internal flow path 482), a path connecting the port P52 and the port P56 (internal flow path 483), a path connecting the port P53 and the port P54 (internal flow path 481), and a path connecting the port P57 and the port P58 (internal flow path 484).

As a result, a closed circuit 70 and a closed circuit 80 are formed. The closed circuit 70 has a first path in which the heat medium circulates through the following flow paths: the flow path 210c where the chiller 220 etc. are provided, and the flow path 270c where the battery 272 etc. are provided. The closed circuit 80 has a second path in which the heat medium circulates through the following flow paths: the flow path 230d where the radiator 231 etc. are provided, and the flow path 260c where the PCU 263 etc. are provided. A circuit having the closed circuits 70, 80 formed by the battery heating communication pattern is an example of the "first circuit" of the present disclosure.

As shown in FIG. 16A, the ten-way valve 480 has a circular shape as viewed perpendicularly to the plane of the paper. The ten-way valve 480 includes a rotating element inside a housing. The rotating element has the internal flow paths 481, 482, 483, and 484 and is rotatable clockwise or counterclockwise by an actuator (not shown). When the actuator is driven according to a control command from the ECU 530, the rotating element rotates to change the connection of each port. The communication pattern of the thermal management circuit 400 is thus changed.

### Method for Controlling Thermal Management Circuit

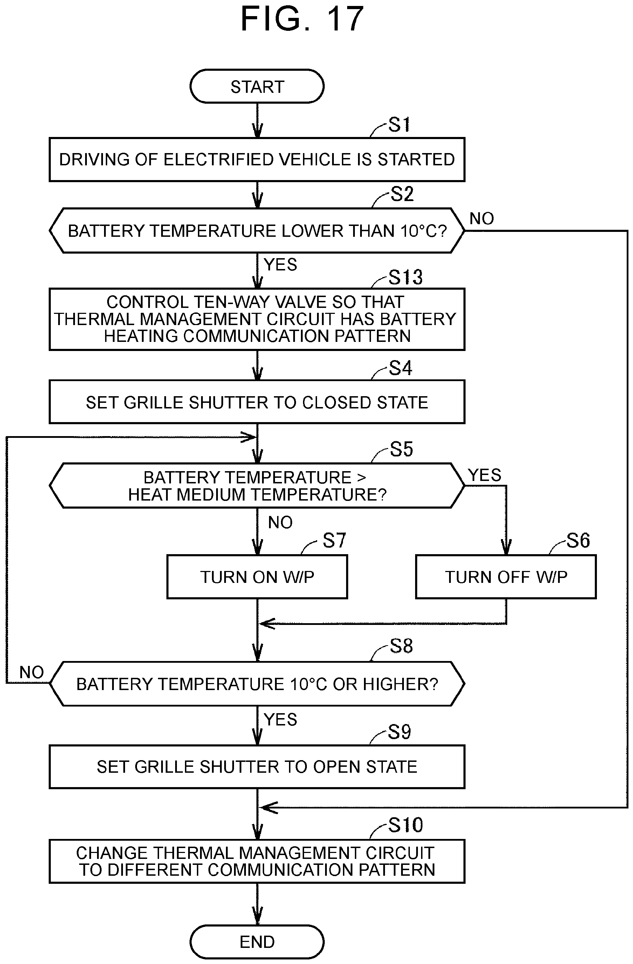

A control method of the thermal management system 4 will be described with reference to FIG. 17. FIG. 17 is a flowchart showing a control that is performed by the thermal management system 4 according to the fourth embodiment. The flow shown in FIG. 17 is merely illustrative, and the control in the present disclosure is not limited to the example shown in FIG. 17. Description of the same steps as those in the control flow of the third embodiment will be simplified or omitted.

In step S2, the ECU 530 determines whether the temperature of the battery 272 detected by the battery temperature sensor 273 is lower than 10°C. When it is determined that the temperature of the battery 272 detected by the battery temperature sensor 273 is lower than 10°C (Yes in S2), the process proceeds to step S13. When the temperature of the battery 272 is equal to or higher than 10°C (No in S2), the process proceeds to step S10.

In step S13, the ECU 530 controls the ten-way valve 480 so that the thermal management circuit 400 has the battery heating communication pattern shown in FIGS. 16A and 16B. The process then proceeds to S4.

In step S10, the ECU 530 controls the ten-way valve 480 to change the communication pattern of the thermal management circuit 400 from the battery heating communication pattern shown in FIGS. 16A and 16B to a different communication pattern (e.g., a communication pattern suitable for traveling of the electrified vehicle 1a). The process then ends.

Other configurations and effects of the fourth embodiment are the same as those of the third embodiment.

The first to fourth embodiments illustrate an example in which the heating control of the battery is performed after the start of driving of the electrified vehicle 1a (after the traction system is activated). However, the present disclosure is not limited to this. For example, the heating control may be performed so that the temperature of the battery becomes equal to or higher than a predetermined temperature at the start of external charging. External charging refers to charging the battery with charging power supplied from charging equipment (not shown) external to the electrified vehicle. The predetermined temperature is not particularly limited as long as it is within a temperature range that allows efficient charging of the battery. Alternatively, the heating control of the battery may be performed at the time of plug-in. Plug-in refers to plugging a charging plug into the electrified vehicle 1a. The heating control of the battery may be started before plug-in. For example, the heating control of the battery may be started a predetermined time (e.g., 10 minutes) before the scheduled start time of external charging (scheduled start time of supplying charging power). The heating control may be started a predetermined time (e.g., 30 minutes) before the scheduled start time of the following trip.

The first to fourth embodiments illustrate an example in which the thermal management system is mounted on an electrified vehicle. However, the present disclosure is not limited to this. The thermal management system may be mounted on an electrical apparatus different from an electrified vehicle (e.g., a stationary electrical storage device).

The first to fourth embodiments illustrate an example in which the control for switching the operating state of the water pump based on the comparison result between the battery temperature and the heat medium temperature is performed. However, the present disclosure is not limited to this. In addition to or instead of the above control, a control for switching whether to perform heat exchange in the chiller according to whether there is a request to turn on the heater (an example of "heating request" in the present disclosure) may be performed. Alternatively, neither of the above two controls may be performed. Alternatively, during the period in which the water pump is operable, the operating state of the water pump may be continuously maintained regardless of the comparison result between the battery temperature and the heat medium temperature, or the water pump may be intermittently operated or the output power of the water pump may be increased or decreased according to various temperature conditions such as the battery temperature and the heat medium temperature.

The first embodiment illustrates an example in which the thermal management circuit 100 includes the high temperature circuit 110. However, the present disclosure is not limited to this. The thermal management circuit 100 may not include the high temperature circuit 110. The thermal management circuit 200 of the second embodiment, the thermal management circuit 300 of the third embodiment, and the thermal management circuit 400 of the fourth embodiment may include a high temperature circuit having the same function as the high temperature circuit 110.

The first to fourth embodiments illustrate an example in which the heating control of the battery is performed after the start of driving of the electrified vehicle 1a (after the traction system is activated). However, the present disclosure is not limited to this. The heating control may be performed other than after the start of driving of the electrified vehicle 1a (after the traction system is activated). For example, the heating control may be performed when the battery temperature falls below a predetermined threshold (10°C in the above embodiments). In this case, the ECU may acquire the detected value of the battery temperature at predetermined intervals (e.g., every hour). The battery may be heated by causing a current larger than normal to flow through the battery with the battery heating communication pattern formed during traveling of the electrified vehicle 1a.

The configurations (processes) of the above embodiments and modifications may be combined.

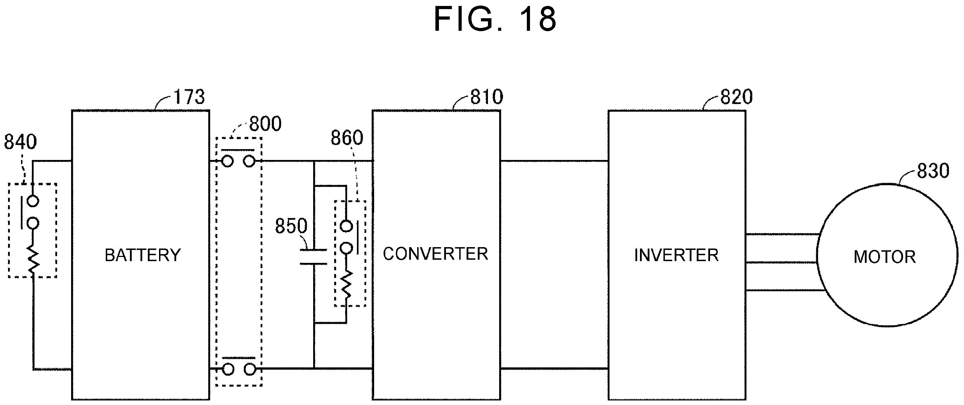

The heating control of the battery 173 will be described in detail with reference to FIG. 18. FIG. 18 shows a circuit configuration including the battery 173, a converter 810, an inverter 820, and a motor 830. The battery 173 is connected to the converter 810 via a system main relay (SMR) 800. The converter 810 is connected to the inverter 820. The inverter 820 is connected to the motor 830. A discharge circuit 840 including a switch and a resistive element is connected to the battery 173. A smoothing capacitor 850 is provided between the battery 173 and the converter 810. A discharge circuit 860 composed of a switch and a resistive element is connected in parallel with the smoothing capacitor 850. FIG. 18 is representatively illustrated based on the configuration of the first embodiment. However, the same configuration may be applied to the second to fourth embodiments.

The heating control of the battery 173 may include, for example, a control for electrically disconnecting the SMR 800 and turning on the switch of the discharge circuit 840. In this case, a current flows through the closed circuit formed by the battery 173 and the discharge circuit 840. The heating control of the battery 173 may include a control for turning off the switch of the discharge circuit 840 and turning on the SMR 800 and the switch of the discharge circuit 860. In this case, a current flows through the closed circuit formed by the battery 173, the SMR 800, and the discharge circuit 860. The heating control of the battery 173 may include a control for turning on the SMR 800 and turning off the switches of the discharge circuits 840, 860 to cause a current adjusted so that no torque is generated in the motor 830 to flow.

The embodiments disclosed herein should be considered as illustrative in all respects, and not restrictive. The scope of the invention is set forth in the claims rather than in the above description, and is intended to include all modifications within the meaning and scope equivalent to those of the claims.

## Claims

1. A thermal management system (1; 2; 3; 4) mounted on an electrical apparatus (1a), the thermal management system (1; 2; 3; 4) comprising:
a first flow path (170b; 270a; 270b; 270c), a second flow path (130b; 260a; 260b; 260c), a third flow path (130a; 230a; 230c; 230d), and a fourth flow path (170a; 210a; 210b; 210c) configured such that a heat medium flows through the first flow path (170b; 270a; 270b; 270c), the second flow path (130b; 260a; 260b; 260c), the third flow path (130a; 230a; 230c; 230d), and the fourth flow path (170a; 210a; 210b; 210c);
an electrical storage device (173; 272) configured to exchange heat with the heat medium in the first flow path (170b; 270a; 270b; 270c);
a drive device (133, 134; 263, 264) configured to exchange heat with the heat medium in the second flow path (130b; 260a; 260b; 260c) and to supply a driving force to the electrical apparatus (1a);
a radiator (122; 231) located in the third flow path (130a; 230a; 230c; 230d);
a chiller device (160; 220) located in the fourth flow path (170a; 210a; 210b; 210c); and
a switching device (180, 190; 280; 380, 390; 480) configured to switch a connection state among the first flow path (170b; 270a; 270b; 270c), the second flow path (130b; 260a; 260b; 260c), the third flow path (130a; 230a; 230c; 230d), and the fourth flow path (170a; 210a; 210b; 210c), wherein
the switching device (180, 190; 280; 380, 390; 480) is configured to cause a first circuit to be formed when heating of the electrical storage device (173; 272) for increasing a temperature of the electrical storage device (173; 272) is performed by causing a current to flow through the electrical storage device (173; 272), the first circuit having a first path and a second path, the first path being a path in which the heat medium circulates through the first flow path (170b; 270a; 270b; 270c) and the fourth flow path (170a; 210a; 210b; 210c), and the second path being a path in which the heat medium circulates through the second flow path (130b; 260a; 260b; 260c) and the third flow path (130a; 230a; 230c; 230d).

2. The thermal management system (1; 2; 3; 4) according to claim 1, further comprising a shutoff device (124; 232) provided for the radiator (122; 231) and configured to switch between an introducing state in which introduction of outside air into the radiator (122; 231) is allowed and a shutoff state in which the introduction of the outside air into the radiator (122; 231) is shut off, wherein the shutoff device (124; 232) is switched to the shutoff state when the first circuit is provided.

3. The thermal management system (1; 2; 3; 4) according to claim 1, wherein:
the electrical apparatus (1a) is an electrified vehicle (1a); and
the heating of the electrical storage device (173; 272) is performed after a traction system of the electrified vehicle (1a) is activated.

4. The thermal management system (1; 2; 3; 4) according to claim 1, wherein:
the electrical storage device (173; 272) is configured such that external charging is performed, the external charging being charging of the electrical storage device (173; 272) with charging power supplied from charging equipment external to the electrical apparatus (1a); and
the heating of the electrical storage device (173; 272) is performed in such a manner that the temperature of the electrical storage device (173; 272) becomes equal to or higher than a predetermined temperature at start of the external charging.

5. The thermal management system (1; 2; 3; 4) according to any one of claims 1 to 4, further comprising:
a first temperature sensor (175; 273) configured to measure the temperature of the electrical storage device (173; 272);
a second temperature sensor (176; 274) configured to measure a temperature of the heat medium in the first flow path (170b; 270a; 270b; 270c); and
a pump (171; 211) configured to circulate the heat medium in the first circuit, wherein:
the pump (171; 211) is stopped when a measured value from the first temperature sensor (175, 273) is higher than a measured value from the second temperature sensor (176, 274) during the heating of the electrical storage device (173; 272) with the first circuit provided; and
the pump (171; 211) is driven when the measured value from the first temperature sensor (175; 273) is equal to or less than the measured value from the second temperature sensor (176; 274) during the heating of the electrical storage device (173; 272) with the first circuit provided.

6. The thermal management system (1; 2; 3; 4) according to any one of claims 1, 2, and 4, wherein:
the electrical apparatus (1a) is an electrified vehicle (1a);
the chiller device (160; 220) is configured to exchange heat with an air conditioning circuit (114; 240) configured to adjust a cabin temperature of the electrified vehicle (1a); and
the electrical storage device (173; 272) and the air conditioning circuit (114; 240) are configured to exchange heat with each other via the chiller device (160; 220) when there is a heating request using the air conditioning circuit (114; 240) during the heating of the electrical storage device (173; 272).

7. The thermal management system (1; 2; 3; 4) according to claim 3, wherein:
the chiller device (160; 220) is configured to exchange heat with an air conditioning circuit (114; 240) configured to adjust a cabin temperature of the electrified vehicle (1a); and
the electrical storage device (173; 272) and the air conditioning circuit (114; 240) are configured to exchange heat with each other via the chiller device (160; 220) when there is a heating request using the air conditioning circuit (114; 240) during the heating of the electrical storage device (173; 272).

8. The thermal management system (1; 2; 3; 4) according to any one of claims 1 to 4, further comprising a control device (500; 510; 520; 530) configured to control the switching device (180, 190; 280; 380, 390; 480).

9. The thermal management system (1; 2; 3; 4) according to any one of claims 1 to 4, wherein the switching device (180, 190; 280; 380, 390; 480) is an eight-way valve (280).
